# EUROPÄISCHE PATENTSCHRIFT

(11) **EP 1 015 538 B1**
(45) Veröffentlichungstag und Bekanntmachung des Hinweises auf die Patenterteilung: **13.10.2004**
(21) Anmeldenummer: 98948879.6
(22) Anmeldetag: 28.08.1998
(51) Int. Cl.: C11D 1/825, B01F 17/42

(54) **SCHAUMARME TENSIDMISCHUNGEN MIT HYDROXYMISCHETHERN**
LIGHTLY-FOAMING TENSIDE MIXTURES WITH HYDROXY MIXED ETHERS
MELANGES TENSIO-ACTIFS MOUSSANT PEU ET CONTENANT DES HYDROXYETHERS MIXTES

(30) Priorität: 05.09.1997 DE 19738866
(43) Veröffentlichungstag der Anmeldung: 05.07.2000
(73) Patentinhaber: Cognis Deutschland GmbH & Co. KG, 40589 Düsseldorf (DE)
(72) Erfinder: SCHMID, Karl-Heinz, D-40822 Mettmann (DE); KÖSTER, Rita, D-40479 Düsseldorf (DE)
(86) Internationale Anmeldenummer: PCT/EP1998/005464
(87) Internationale Veröffentlichungsnummer: WO 1999/013035

(56) Entgegenhaltungen:
- EP-A- 0 343 503
- WO-A-94/22800
- WO-A-96/12001
- DE-A- 3 723 323
- DE-A- 4 323 252
- US-A- 5 294 365

## Beschreibung

Die Erfindung betrifft schaumarme Tensidmischungen enthaltend Hydroxymischether und spezielle weitere schaumarme nichtionogene Tenside sowie die Verwendung derartiger schaumarmer Mischungen als Tenside in Reinigungsmitteln für die Industrie und im Haushalt. Ein weiterer Gegenstand der vorliegenden Erfindung betrifft die Verwendung derartiger schaumarmer Mischungen in Klarspülmitteln, insbesondere für die maschinelle Geschirreinigung sowie Klarspülmittel enthaltend derartige Hydroxymischether.

Für Tenside, die in Reinigungsmitteln für das Gewerbe und für die Industrie Verwendung finden sollen, ist es von entscheidender Bedeutung, daß sie unter den gegebenen Einsatzbedingungen wenig Eigenschaum liefern, um einen reibungslosen Reinigungsprozeß zu gewährleisten. Aber auch Reinigungsmittel für den Haushalt wie zum Beispiel Glanzfußbodenreiniger mit Wachsen sollen möglichst wenig Schaum entwickeln, damit nach Abtrocknung keine unansehlichen Wachsbläschen zurückbleiben.

Häufig werden von den Tensiden jedoch nicht nur eine geringe Tendenz zum Eigenschaum verlangt, sondern zudem noch zusätzliche Eigenschaften wie gute Netzeigenschaften, Alkalistabilität oder auch ein gutes Abspülverhalten. Für die Reinigung von Flaschen in der Getränkeindustrie beispielsweise müssen die Tenside noch unter hochalkalischen Bedingungen stabil sein, d.h. sie sollten keine schäumenden Abbauprodukte liefern. Bei den industriellen Reinigungsprozessen in der Metallindustrie wiederum müssen sie zusätzlich sehr gute Netzeigenschaften aufweisen, damit eine einwandfreie Entfernung der Zieh- und Walzfette gewährleistet ist. Ein gutes Abspülvermögen spielt beispielsweise bei der Spritzreinigung von Autos eine wichtige Rolle, wo nach dem eigentlichen Waschprozeß innerhalb kürzester Zeit die Tenside zusammen mit dem Schmutz mit wenig Wasser vollkommen abgespült werden müssen. Des weiteren soll das Wasser in einem möglichst dünnen, zusammenhängenden Film von der Autokarosserie ablaufen, damit beim anschließenden kurzen Trocknungsprozeß keine Wassertropfen, Streifen oder Filme zurückbleiben.
Auch beim maschinellen Geschirrspülen werden im sogenannten Klarspülgang spezielle Klarspülmittel verwendet, die ein gutes Netzvermögen besitzen müssen, um die Oberflächenspannung des Nachspülwassers so weit herabsetzen zu können, daß dieses filmartig vom Geschirr abläuft und nach der Trocknung keine sichtbaren Rückstände wie Kalkflecken hinterläßt. Nebenbei müssen aufgrund der starken Flottenbewegung in Geschirrspülmaschinen die Klarspüler möglichst schaumarm sein.

Aus der DE-A1- 37 23 873 sind Hydroxymischether bekannt, die alleine oder in Mischung mit Fettalkoholalkoxylaten in Klarspülern für die maschinelle Geschirreinigung verwendet werden können. Diese Hydroxymischether werden durch Umsetzung von Epoxiden mit 10 bis 18 C-Atomen und Alkoholethoxylaten, ethoxyliert mit 7 bis 30 Mol Ethylenoxid, hergestellt.

Aus der DE-A1-37 23 323 sind ebenso Hydroxymischether bekannt, die durch Umsetzung von Epoxiden mit 8 bis 18 C-Atomen und Alkoholalkoxylaten, alkoxyliert mit bis zu 30 Mol Etylenoxid und/oder Propylenoxid, hergestellt werden können. Gemäß dieser Offenlegungsschrift können die Hydroxymischether alleine als schaumdrückende Zusätze in schaumarmen Reinigungsmitteln verwendet werden.

Aus der internationalen Anmeldung WO 96/12001 schließlich sind Hydroxymischether bekannt, die durch Umsetzung von Epoxiden mit 4 bis 16 C-Atomen mit Alkoholalkoxylaten hergestellt werden, wobei die Alkohole sich von 1- bis 3-wertigen Alkoholen ableiten können, die mit 0 bis 5 Mol Propylenoxid und 1 bis 30 Mol Etylenoxid oder nur mit 1 bis 35 Mol Propylenoxid alkoxyliert worden sind. Derartige Hydroxymischether können als Tensidmischung für die Reinigung von harten Oberflächen, insbesondere für Geschirr, verwendet werden oder in Form von flüssigen Blends als Klarspülmittel.

Aufgabe der vorliegenden Erfindung war es, Tensidmischungen für die Reinigung von verschiedenen Oberflächen wie Glas, Geschirr, Metalloberflächen, Kunststoffe, Steinböden und lackierte Metalloberflächen zur Verfügung zu stellen. Die Tensidmischungen sollten eine geringe Eigentendenz zur Schaumentwicklung aufweisen, aber gleichzeitig weiterhin ein gutes Abspülvermögen und einen verbesserten Klartrockeneffekt zeigen, damit keine störenden sichtbaren Flecken auf dem gereinigten Gut hinterlassen werden. Schließlich sollten die Tensidmischungen ein gutes Kälteverhalten haben, damit sowohl bei den zum Teil hohen Anwendungstemperaturen als auch bei den zum Teil niedrigen Lagerungstemperaturen keine störende Phasentrennung auftritt.

Die komplexe Aufgabe konnte gelöst werden durch Mischungen enthaltend Hydroxymischether sowie weitere spezielle schaumarme nichtionogene Tenside.

Ein Gegenstand der vorliegenden Erfindung betrifft daher

Schaumarme Tensidmischungen enthaltend
a. Hydroxymischether der Formel (I)

   R¹O[CH₂CH(CH₃)O]ₓ(CH₂CHR²O)_{y}[CH₂CH(OH)R³] (I)

   in der R¹ für einen Alkyl- und/oder Alkenylrest mit 4 bis 18 C-Atomen
   R² für Wasserstoff oder einen Methyl- oder Ethylrest
   R³ für einen Alkylrest mit 2 bis 22 C-Atomen
   x für 0 oder eine Zahl von 1 bis 10 und
   y für eine Zahl von 1 bis 30 steht,
   und
b. schaumarme nichtionogene Tenside aus der Gruppe gebildet von
   b1) ggf. endgruppenverschlossenen Fettalkoholpolyethylenglykol/polypropylenglykolethern der Formel (II)

      R⁴O(CH₂CH₂O)ₙ[CH₂(CH₃)CHO]ₘR⁵ (II)

      in der R⁴ für einen Alkyl- und/oder Alkenylrest mit 8 bis 22 C-Atomen
      R⁵ für H oder einen Alkylrest mit 1 bis 8 C-Atomen
      n für eine Zahl von 1 bis 15 und
      m für 0 oder eine Zahl von 1 bis 10 steht, und
   b2) ggf. endgruppenverschlossenen Fettalkoholpolypropylenglykol/polyethylenglykolethern der Formel (III)

      R⁶O[CH₂(CH₃)CHO]ₚ(CH₂CH₂O)_{q}R⁷ (III)

      in der R⁶ für einen Alkyl- und/oder Alkenylrest mit 8 bis 22 C-Atomen
      R⁷ für H oder einen Alkylrest mit 1 bis 8 C-Atomen
      p für eine Zahl von 1 bis 5 und
      q für eine Zahl von 0 bis 15 steht.

Hydroxymischether der Formel (I) sind literaturbekannt und werden beispielsweise in der schon zitierten internationalen Anmeldung WO 96/12001 beschrieben. Sie werden hergestellt durch Umsetzung von 1,2-Epoxyalkanen (R³CHOCH₂), wobei R³ für einen aliphatischen gesättigten, geradkettigen oder verzweigten Alkylrest mit 2 bis 22 C-Atomen steht, mit einwertigen Alkoholen, die alkoxyliert worden sind. Bevorzugt werden solche Hydroxymischether, die sich von Alkoxylaten von einwertigen Alkoholen der Formel R¹-OH ableiten, wobei R¹ für einen aliphatischen, gesättigten, geradkettigen oder verzweigten Alkylrest mit 4 bis 18 C-Atome steht. Beispiele für derartige geradkettige Alkohole sind die sogenannten Fettalkohole wie Capron-, Capryl-, Lauryl-, Myristyl- und Stearylalkohol sowie deren technische Mischungen, wie sie bei der Hochdruckhydrierung von technischen Methylestern auf Basis von Fetten und Ölen anfallen. Beispiele für derartige verzweigte Alkohole sind sogenannte Oxoalkohole, die meist 2 bis 4 Methylgruppen als Verzweigungen tragen und nach dem Oxoprozeß hergestellt werden und sogenannte Guerbetalkohole, die in 2-Stellung mit einer Alkylgruppe verzweigt sind. Geeignete Guerbetalkohole sind 2-Ethylhexanol, 2-Butyloctanol, 2-Hexyldecanol und/oder 2-Octyldodecanol.

Die Alkohole werden in Form ihrer Alkoxylate eingesetzt, die durch Umsetzung der Alkohole mit Ethylenoxid, Propylenoxid und/oder Butylenoxid auf bekannte Weise hergestellt werden. Bevorzugt werden Alkoxylate von Alkoholen eingesetzt, die mit 10 bis 25 Mol Ethylenoxid (R²= Wasserstoff, x = 0, y = 10 bis 25) oder mit 1 bis 3 Mol Propylenoxid und anschließend mit 10 bis 25 Mol Ethylenoxid (R² = Wasserstoff, x = 1 bis 3, y = 10 bis 25) alkoxyliert worden sind.

Ganz besonders geeignete Hydroxymischether der Formel (I) sind solche, in der R¹ für einen gesättigten geradkettigen Alkylrest mit 8 bis 14 C-Atomen, R² für Wasserstoff, R³ für einen gesättigten geradkettigen Alkylrest mit 8 bis 12 C-Atomen, x für 0 oder für Zahlen von 1 bis 3 und y für Zahlen von 10 bis 25 steht. Derartige Hydroxymischether werden in der DE-A1 - 37 23 323 genau beschrieben.

Die Tensidmischungen enthalten als weiteren zwingenden Bestandteil schaumarme nichtionogene Tenside der Formel (II) und/oder (III). Einer Ausführungsform entsprechend enthalten sie Fettalkoholpolyethylen-glykol/polypropylenglykolether der Formel (II), die ggf. endgruppenverschlossen sind. Fettalkoholpolyethylenglykol/-polypropylenglykolether, die nicht endgruppenverschlossen sind (R⁵ = H), werden beispielsweise in der europäischen Patentanmeldung EP-A2- 161 537 und in den deutschen Offenlegungsschriften DE- A1 39 28 602 und DE- A1- 39 28 600 beschrieben. Besonders geeignete nichtendgruppenverschlossene Vertreter sind solche der Formel (II), in denen R⁴ für einen aliphatischen, gesättigten, geradkettigen oder verzweigten Alkylrest mit 8 bis 16 C-Atomen, n für eine Zahl von 1 bis 5, m für 0 und R⁵ für Wasserstoff steht. Es handelt sich hierbei um Anlagerungsprodukte von 1 bis 5 Mol Ethylenoxid an monofunktionelle Alkohole. Als Alkohole sind die oben beschriebenen Alkohole wie Fettalkohole, Oxoalkohole und Guerbetalkohole geeignet. Besonders geeignet sind von solchen Alkoholethoxylaten solche, die eine eingeengte Homologenverteilung aufweisen. Weitere geeignete Vertreter von nichtendgruppenverschlossenen Vertretern sind solche der Formel (II), in der R⁴ für einen aliphatischen, gesättigten, geradkettigen oder verzweigten Alkylrest mit 8 bis 16 C-Atomen, n für eine Zahl von 2 bis 7, m für eine Zahl von 3 bis 7 und R⁵ für Wasserstoff steht. Es handelt sich hierbei um Anlagerungsprodukte von zunächst mit 2 bis 7 Mol Ethylenoxid und dann mit 3 bis 7 Mol Propylenoxid alkoxylierten monofunktionellen Alkohole der schon beschriebenen Art.

Die endgruppenverschlossenen Verbindungen der Formel (II) sind mit einer Alkylgruppe mit 1 bis 8 C-Atomen verschlossen (R⁵). Häufig werden derartige Verbindungen in der Literatur auch als Mischether bezeichnet. Geeignete Vertreter sind Methylgruppenverschlossene Verbindungen der Formel (II), in denen R⁴ für einen aliphatischen, gesättigten, geradkettigen oder verzweigten Alkylrest mit 8 bis 16 C-Atomen, n für eine Zahl von 2 bis 7, m für eine Zahl von 3 bis 7 und R⁵ für eine Methylgruppe steht. Derartige Verbindungen können leicht durch Umsetzung der entsprechenden nicht endgruppenverschlossenen Fettalkoholpolyethylenglykol/polypropylenglykolether mit Methylchlorid in Gegenwart einer Base hergestellt werden.

Geeignete Vertreter von Alkylgruppenverschlossenen Verbindungen sind solche der Formel (II), in denen R⁴ für einen aliphatischen, gesättigten, geradkettigen oder verzweigten Alkylrest mit 8 bis 16 C-Atomen, n für eine Zahl von 5 bis 15, m für 0 und R⁵ für eine Alkylgruppe mit 4 bis 8 C-Atomen steht. Bevorzugt wird der Endgruppenverschluß mit einer geradkettigen oder verzweigten Butylgruppe durchgeführt, indem der entsprechende Fettalkoholpolyethylenglykolether mit n-Butylchlorid oder mit tert. Butylchlorid in Gegenwart von Basen umgesetzt wird.

Anstelle der Verbindungen der Formel (II) oder in Mischung mit ihnen können gegebenenfalls endgruppenverschlossene Fettalkoholpolypropylenglykol/polyethylenglykolether der Formel (III) zusammen mit den Hydroxymischethern enthalten sein. Derartige Verbindungen werden beispielsweise in der deutschen Offenlegungsschrift DE-A1-43 23 252 beschrieben. Besonders bevorzugte Vertreter der Verbindungen der Formel (III) sind solche, in denen R⁶ für einen aliphatischen, gesättigten, geradkettigen oder verzweigten Alkylrest mit 8 bis 16 C-Atomen, p für eine Zahl von 1 bis 5, q für eine Zahl von 1 bis 6 und R⁷ für Wasserstoff steht. Es handelt sich hierbei vorzugsweise um Anlagerungsprodukte von 1 bis 5 Mol Propylenoxid und von 1 bis 6 Mol Ethylenoxid an monofunktionelle Alkohole, die bereits im Zusammenhang mit den Hydroxymischethem als geeignet beschrieben worden sind.

Die schaumarmen Tensidmischungen können die Komponenten a) und b) im Gewichtsverhältnis 10 : 90 bis 80 : 20, vorzugsweise 30 : 70 bis 70 : 30 und insbesondere 30 : 70 bis 40 : 60 enthalten. Bei den Komponenten b) kann es sich ausschließlich um solche von b1) oder ausschließlich um solche von b2) oder um Mischungen von b1) und b2) handeln, wobei die Komponenten b1) und b2) zueinander in weiten Bereichen variieren können. Werden Mischungen von b1) und b2) eingesetzt, können sie im Gewichtsverhältnis 10 : 90 bis 90 : 10 vorliegen.

Ein weiterer Gegenstand der vorliegenden Erfindung betrifft die Verwendung der beschriebenen Tensidmischungen in Reinigungsmitteln für die Industrie und im Haushalt. Im Sinne der vorliegenden Erfindung werden die beschriebenen Tensidmischungen vorzugsweise als schaumarme Tensidmischungen für gewerbliche Wäschereien, für die Reinigung von Metalloberflächen in der Metallindustrie, für die Reinigung von Glasflaschen in der Getränkeindustrie, für die Spritzreinigung von Autos, für Fußbodenreiniger, vor allem für solche mit Wachsen und in der Gebäudereinigung verwendet. Die beschriebenen Tensidmischungen können auch als hervorragendes Netzmittel in der textilen Vorbehandlung verwendet werden.

Ein weiterer Gegenstand der vorliegenden Erfindung betrifft die Verwendung der beschriebenen Mischungen in Klarspülmitteln für die maschinelle Geschirreinigung im Haushalt und für das Gewerbe.

Ein weiterer Gegenstand der vorliegenden Erfindung betrifft Klarspülmittel, insbesondere für die maschinelle Geschirreinigung im Haushalt und für das Gewerbe, enthaltend
0,5 bis 20 Gew.% Hydroxymischether der Formel (I)
0,5 bis 20 Gew.% schaumarme Tenside der Formel (II) und/oder (III)
0 bis 40 Gew.% Lösungsvermittler
0,1 bis 50 Gew.% Carbonsäuren
1 bis 20 Gew.% Alkalisalze niedermolekularer Alkylbenzolsulfonsäuren
ad 100 Gew.% Wasser.

Als Carbonsäuren eignen sich die als Komplexbildner bekannten Carbonsäuren wie Zitronensäure, Weinsäure und/oder Glykolsäure. Als Alkalisalz niedermolekularer Alkylbenzolsulfonsäure eignet sich insbesondere Natriumcumolsulfonat. Typische Lösungsvermittler sind ein- und mehrwertige Alkohole. Fakultativ können weitere übliche Bestandteile in üblichen Mengen enthalten sein wie Farbstoffe, Duftstoffe und Konservierungsmittel, wobei die Menge dieser üblichen Bestandteile die Zusatzmenge an Wasser reduziert.

### Beispiele

### I. Eingesetzte Tenside

A) Hydroxymischether gemäß Formel (I)
   A1) C_{8/10}-Fettalkohol-2 PO-20 EO- CH₂CH(OH)C₈H₁₇
   A2) i-C₈-Oxoalkohol-25 EO - CH₂CH(OH)C₁₀H₂₁
B) endgruppenverschlossene Fettalkoholpolyethylenglykolether der Formel (II)
   B1) C_{12/14}-Kokosfettalkohol-5 EO-butylether
   B2) C_{12/14}-Kokosfettalkohol-10 EO-butylether
C) Fettalkoholpolypropylenglykol/polyethylenglykolether der Formel (III)
   C1) C_{12/14}-Kokosfettalkohol-5EO-4PO-Addukt
   C2) C_{12/14}-Kokosfettalkohol-4EO-5PO-Addukt
P0 = Propylenoxid; EO = Ethylenoxid

### II. Anwendungstechnische Prüfung der Klarspülmittel

Die Zusammensetzung der Tensidkomponente der getesteten Klarspülerrezepturen ist in Tab.1 wiedergegeben. Die Mischungen M1 bis M6 sind erfindungsgemäß, die Mischungen M7 bis M10 dienen dem Vergleich.

**Tab.1:**

| Klarspülmittel/ Tensidzusammensetzung Prozentangaben als Gew.-% | | | | | | |
|---|---|---|---|---|---|---|
| M | B1 % | B2 % | A1 % | A2 % | C1 % | C2 % |
| M1 | | 30 | | 70 | | |
| M2 | | 50 | 20 | 30 | | |
| M3 | | | 50 | | 30 | 20 |
| M4 | 30 | 30 | 40 | | | |
| M5 | | 50 | 40 | | 10 | |
| M6 | | | | 35 | | 65 |
| M7 | | | | | 100 | |
| M8 | | 100 | | | | |
| M9 | | | 100 | | | |
| M10 | | 30 | | | 70 | |
| Legende: M = Mischung | | | | | | |

a) Schaumverhalten der Klarspülerrezepturen
   Die Schaumentwicklung des Klarspülmittels wurde mit Hilfe eines Umwälzdruck-Meßgeräts ermittelt. Das Klarspülmittel (3 ml) wurde hierbei im Klarspülgang bei 50 °C von Hand dosiert. Dabei bedeuten:
   0 Punkte = keine Schaumentwicklung
   1 Punkt = schwache Schaumentwicklung
   2 Punkte = mittlere Schaumentwicklung (noch akzeptabel)
   3 Punkte = starke Schaumentwicklung
b) Trocknung:
   15 Minuten nach Beendigung des Spülprogramms wurde die Tür der Geschirrspülmaschine vollständig geöffnet. Nach 5 Minuten wurde die Trocknung durch Auszählen der Resttropfen auf den unten aufgeführten Geschirrteilen bestimmt. Bewertung:
   0 Punkte = mehr als 5 Tropfen
   1 Punkt = 5 Tropfen
   2 Punkte = 4 Tropfen
   3 Punkte = 3 Tropfen
   4 Punkte = 2 Tropfen
   5 Punkte = 1 Tropfen
   6 Punkte = 0 Tropfen (optimale Trocknung)
c) Klarspüleffekt:
   Nach Beurteilung der Trocknung wurden die Geschirrteile außerhalb der Geschirrspülmaschine 30 Minuten zum Abkühlen abgestellt und dann unter Beleuchtung in einem schwarzen Kasten visuell abgemustert. Beurteilt wurden die auf dem Geschirr und Besteck verbliebenen eingetrockneten Resttropfen, Schlieren, Beläge, trüben Filme usw. Bewertung:
   0 Punkte = schlechter Klarspüleffekt
   8 Punkte = optimaler Klarspüleffekt
d) Für die Leistungsprüfungen b) und c) wurden die Versuche in der Geschirrspülmaschine Bauknecht GSF 1162 mit enthärtetem Wasser durchgeführt. Dazu wurde das 65°C Normalprogramm gewählt. Im Reinigungsgang wurden 40 ml Somat^{(R)} Reiniger (Henkel) dosiert. Die Klarspülmittelmenge betrug 3 ml und wurde von Hand bei 50°C im Klarspülgang dosiert. Die Salzbelastung des Wassers lag zwischen 600 und 700 mg/l. Pro Klarspülmittelrezeptur wurden 3 Spülgänge durchgeführt. Zur Beurteilung der Trocknung sowie des Klarspüleffekts wurden folgende Geschirrteile eingesetzt:
   o Gläser "Neckar-Becher" (Fa. Schott-Zwiesel), 6 Stück
   o Edelstahlmesser "Brasilia" (Fa. WMF), 3 Stück
   o weiße Prozellan-Eßteller (Fa. Arzberg), 3 Stück
   o rote Kunststoffteller "Valon-Eßteller" (Fa. Haßmann), 3 Stück

### Beispiele 1 bis 6, Vergleichsbeispiele V1 bis V4:

**Tab.2:**

| Klarspülmittel-Formulierungen Prozentangaben als Gew.-% ad 100 Gew.-% Wasser; CS = Natriumcumolsulfonat; DS = Zitronensäure | | | | | |
|---|---|---|---|---|---|
| Bsp. | M | c(Tensid) | Cumal sulfonat % | Citronen saeure % | Aussehen bei 70°C |
| 1 | M1 | 17,5 | 3,0 | 0,5 | klar |
| 2 | M2 | 17,5 | 3,0 | 0,5 | klar |
| 3 | M3 | 17,5 | 3,0 | 0,5 | klar |
| 4 | M4 | 17,5 | 3,0 | 0,5 | klar |
| 5 | M5 | 17,5 | 3,0 | 0,5 | klar |
| 6 | M6 | 17,5 | 3,0 | 0,5 | klar |
| V1 | M7 | 17,5 | 3,0 | 0,5 | klar |
| V2 | M8 | 17,5 | 3,0 | 0,5 | klar |
| V3 | M9 | 17,5 | 3,0 | 0,5 | klar |
| V4 | M10 | 17,5 | 3,0 | 0,5 | klar |

### Beispiele 1 bis 6, Vergleichsbeispiele V1 bis V4:

**Tab.3:**

| Trocknung der Geschirrteile/Klarspüleffekt | | | | | | | | | | |
|---|---|---|---|---|---|---|---|---|---|---|
| Bsp. | M. | Gläser | | Messer | | Porzellan | | Kunstst. | | Schaumnote |
| | | T | KSE | T | KSE | T | KSE | T | KSE | |
| 1 | M1 | 3,7 | 6,5 | 4,1 | 4,1 | 5,0 | 7,1 | 4,0 | 6,0 | 0 |
| 2 | M2 | 3,5 | 6,3 | 4,2 | 3,5 | 5,1 | 6,9 | 3,9 | 6,1 | 0 |
| 3 | M3 | 3,6 | 6,8 | 4,3 | 3,7 | 4,8 | 6,8 | 4,1 | 5,9 | 1 |
| 4 | M4 | 3,4 | 6,4 | 4,4 | 3,5 | 4,9 | 6,7 | 4,1 | 6,1 | 1 |
| 5 | M5 | 3,3 | 6,5 | 4,5 | 3,3 | 4,8 | 7,2 | 4,0 | 6,3 | 1 |
| 6 | M6 | 3,4 | 6,6 | 4,3 | 3,8 | 4,9 | 7,3 | 4,1 | 6,1 | 0 |
| V1 | M7 | 2,5 | 5,8 | 4,2 | 1,9 | 4,0 | 6,0 | 4,0 | 5,1 | 3 |
| V2 | M8 | 1,3 | 5,3 | 2,3 | 1,7 | 4,0 | 4,3 | 2,7 | 4,5 | 0 |
| V3 | M9 | 2,4 | 5,8 | 4,4 | 2,2 | 4,9 | 6,4 | 4,1 | 5,1 | 1 |
| V4 | M10 | 2,6 | 5,5 | 4,3 | 2,5 | 4,8 | 6,3 | 3,5 | 4,7 | 1 |
| Legende: T = Trocknung | | | | | | | | | | |
| KSE = Klarspüleffekt | | | | | | | | | | |

Aus Tabelle 3 ist zu entnehmen, daß die erfindungsgemäßen Klarspülmittel bei allen getesteten Oberflächen einen besseren Klarspüleffekt zeigen als die Vergleichsbeispiele und dies bei einer sehr guten bis guten Schaumnote.

## Patentansprüche

1. Schaumarme Tensidmischungen enthaltend
a. Hydroxymischether der Formel (I)
R¹O[CH₂CH(CH₃)O]ₓ(CH₂CHR²O)y[CH₂CH(OH)R³] (I)
in der R¹ für einen Alkyl- und/oder Alkenylrest mit 4 bis 18 C-Atomen
R² für Wasserstoff oder einen Methyl- oder Ethylrest
R³ für einen Alkylrest mit 2 bis 22 C-Atomen
x für 0 oder eine Zahl von 1 bis 10 und
y für eine Zahl von 1 bis 30
steht,
und
b. schaumarme nichtionogene Tenside aus der Gruppe gebildet von
b1) ggf. endgruppenverschlossenen Fettalkoholpolyethylenglykol/polypropylenglykolethern der Formel (II)
R¹O(CH₂CH₂O)ₙ[CH₂(CH₃)CHO]ₘR⁵ (II)
in der R⁴ für einen Alkyl- und/oder Alkenylrest mit 8 bis 22 C-Atomen
R⁵ für H oder einen Alkylrest mit 1 bis 8 C-Atomen
n für eine Zahl von 1 bis 15 und
m für 0 oder eine Zahl von 1 bis 10 steht, und
b2) ggf. endgruppenverschlossenen Fettalkoholpolypropylenglykol/polyethylenglykolethern der Formel (III)
R⁶O[CH₂(CH₃)CHO]ₚ(CH₂CH₂O)_{q}R⁷ (III)
in der R⁶ für einen Alkyl- und/oder Alkenylrest mit 8 bis 22 C-Atomen
R⁷ für H oder einen Alkylrest mit 1 bis 8 C-Atomen
p für eine Zahl von 1 bis 5 und
q für eine Zahl von 0 bis 15 steht.

2. Schaumarme Tensidmischungen nach Anspruch 1, **dadurch gekennzeichnet, daß** sie Hydroxymischether der Formel (I), in der R¹ für einen Alkylrest mit 8 bis 14 C-Atomen. R² für H, R³ für einen Alkylrest mit 8 bis 12 C-Atomen, x für 0 oder die Zahlen 1 bis 3, y für die Zahlen 10 bis 25 und z für die Zahl 1 steht, enthalten.

3. Schaumarme Tensidmischungen nach einem der Ansprüche 1 oder 2, **dadurch gekennzeichnet, daß** sie Fettalkoholpolyethylenglykol/polypropylenglykolether der Formel (II), in der R⁴ für einen Alkylrest mit 8 bis 16 C-Atomen, R⁵ für H, n für eine Zahl von 1 bis 5 und m für 0 steht, enthalten.

4. Schaumarme Tensidmischungen nach einem der Ansprüche 1 bis 3, **dadurch gekennzeichnet, daß** sie Fettalkoholpolyethylenglykol/polypropylenglykotether der Formel (II), in der R⁴ für einen Alkylrest mit 8 bis 16 C-Atomen, R⁵ für H, n für eine Zahl von 2 bis 7 und m für eine Zahl von 3 bis 7 steht, enthalten.

5. Schaumarme Tensidmischungen nach einem der Ansprüche 1 bis 4, **dadurch gekennzeichnet, daß** sie Fettalkoholpolyethylenglykol/polypropylenglykolether der Formel (II), in der R⁴ für einen Alkylrest mit 8 bis 16 C-Atomen, R⁵ für Methylrest, n für eine Zahl von 2 bis 7 und m für eine Zahl von 3 bis 7 steht, enthalten.

6. Schaumarme Tensidmischungen nach einem der Ansprüche 1 bis 5, **dadurch gekennzeichnet, daß** sie Fettalkoholpolyethylenglykol/polypropylenglykolether der Formel (II), in der R⁴ für einen Alkylrest mit 8 bis 16 C-Atomen, R⁵ für einen Alkylrest mit 4 bis 8 C-Atomen, n für eine Zahl von 5 bis 15 und m für 0, enthalten.

7. Schaumarme Tensidmischungen nach einem der Ansprüche 1 bis 6, **dadurch gekennzeichnet, daß** sie R⁶ für Fettalkoholpolypropylenglykol/polyethylenglykolether der Formel (III), in der einen Alkylrest mit 8 bis 16 C-Atomen, R⁷ für H, p eine Zahl von 1 bis 5 und q für eine Zahl von I bis 6 steht, enthalten.

8. Schaumarme Tensidmischungen nach Anspruch 1, **dadurch gekennzeichnet, daß** die Komponenten a) und b) im Gewichtsverhältnis 10: 90 bis 80 : 20 enthalten sind.

9. Verwendung der schaumarmen Tensidmischungen nach Anspruch 1 in Reinigungsmitteln für die Industrie und im Haushalt.

10. Verwendung der schaumarmen Tensidmischungen nach Anspruch 1 in Klarspülmitteln.

11. Klarspülmittel enthaltend
0,5 bis 20 Gew.% Hydroxymischether der Formel (I)
0,5 bis 20 Gew.% schaumarme Tenside der Formel (II) und/oder (III)
0 bis 40 Gew.% Lösungsvermittler
0,1 bis 50 Gew.% Carbonsäuren
1 bis 20 Gew.% Alkalisatze niedermolekularer Alkylbenzolsulfonsäuren
ad 100 Gew.% Wasser.

## Claims

1. Low-foaming surfactant mixtures containing
a. hydroxy mixed ethers corresponding to formula (I):
R¹O[CH₂CH(CH₃)O]ₓ(CH₂CHR²O)_{y}[CH₂CH(OH)R³] (I)
in which
R¹ is an alkyl and/or alkenyl group containing 4 to 18 carbon atoms,
R² is hydrogen or a methyl or ethyl group,
R³ is an alkyl group containing 2 to 22 carbon atoms,
x is 0 or a number of 1 to 10 and
y is a number of 1 to 30
and
b. low-foaming nonionic surfactants from the group consisting of
b1) optionally end-capped fatty alcohol polyethylene glycol/polypropylene glycol ethers corresponding to formula (II):
R⁴O(CH₂CH₂O)ₙ[CH₂(CH₃)CHO]ₘR⁵ (II)
in which
R⁴ is an alkyl and/or alkenyl group containing 8 to 22 carbon atoms,
R⁵ is hydrogen or an alkyl group containing 1 to 8 carbon atoms
n is a number of 1 to 15 and
m is 0 or a number of 1 to 10,
and
b2) optionally end-capped fatty alcohol polypropylene glycol/polyethylene glycol ethers corresponding to formula (III):
R⁶O[CH₂(CH₃)CHO]ₚ(CH₂CH₂O)_{q}R⁷ (III)
in which
R⁶ is an alkyl and/or alkenyl group containing 8 to 22 carbon atoms,
R⁷ is hydrogen or an alkyl group containing 1 to 8 carbon atoms,
p is a number of 1 to 5 and
q is a number of 0 to 15.

2. Low-foaming surfactant mixtures as claimed in claim 1, **characterized in that** they contain hydroxy mixed ethers corresponding to formula (I), in which R¹ is an alkyl group containing 8 to 14 carbon atoms, R² is hydrogen, R³ is an alkyl group containing 8 to 12 carbon atoms, x is 0 or a number of 1 to 3, y is a number of 10 to 25 and z is the number 1.

3. Low-foaming surfactant mixtures as claimed in claim 1 or 2, **characterized in that** they contain fatty alcohol polyethylene glycol/polypropylene glycol ethers corresponding to formula (II), in which R⁴ is an alkyl group containing 8 to 16 carbon atoms, R⁵ is hydrogen, n is a number of 1 to 5 and m is 0.

4. Low-foaming surfactant mixtures as claimed in any of claims 1 to 3, **characterized in that** they contain fatty alcohol polyethylene glycol/polypropylene glycol ethers corresponding to formula (II), in which R⁴ is an alkyl group containing 8 to 16 carbon atoms, R⁵ is hydrogen, n is a number of 2 to 7 and m is a number of 3 to 7.

5. Low-foaming surfactant mixtures as claimed in any of claims 1 to 4, **characterized in that** they contain fatty alcohol polyethylene glycol/polypropylene glycol ethers corresponding to formula (II), in which R⁴ is an alkyl group containing 8 to 16 carbon atoms, R⁵ is a methyl group, n is a number of 2 to 7 and m is a number of 3 to 7.

6. Low-foaming surfactant mixtures as claimed in any of claims 1 to 5, **characterized in that** they contain fatty alcohol polyethylene glycol/polypropylene glycol ethers corresponding to formula (II), in which R⁴ is an alkyl group containing 8 to 16 carbon atoms, R⁵ is an alkyl group containing 4 to 8 carbon atoms, n is a number of 5 to 15 and m is 0.

7. Low-foaming surfactant mixtures as claimed in any of claims 1 to 6, **characterized in that** they contain fatty alcohol polypropylene glycol/polyethylene glycol ethers corresponding to formula (III), in which R⁶ is an alkyl group containing 8 to 16 carbon atoms, R⁷ is hydrogen, p is a number of 1 to 5 and q is a number of 1 to 6.

8. Low-foaming surfactant mixtures as claimed in claim 1, **characterized in that** components a) and b) are present in a ratio by weight of 10:90 to 80:20.

9. The use of the low-foaming surfactant mixtures claimed in claim 1 in industrial and domestic cleaning compositions.

10. The use of the low-foaming surfactant mixtures claimed in claim 1 in rinse agents.

11. A rinse agent containing
0.5 to 20% by weight of the hydroxy mixed ethers corresponding to formula (I),
0.5 to 20% by weight of low-foaming surfactants corresponding to formula (II) and/or (III),
0 to 40% by weight of solubilizers,
0.1 to 50% by weight of carboxylic acids,
1 to 20% by weight of alkali metal salts of low molecular weight alkyl benzene sulfonic acids,
water to 100% by weight.

## Revendications

1. Mélanges tensioactifs peu moussants contenant
a. des hydroxyéthers mixtes de formule (I)
R¹O[CH₂CH(CH₃)O]ₓ(CH₂CHR²O)_{y}[CH₂CH(OH)R³] (I)
dans laquelle R¹ représente un radical alkyle et/ou alcényle comportant de 4 à 18 atomes de carbone,
R² représente un hydrogène ou un radical méthyle ou éthyle,
R³ représente un radical alkyle comportant de 2 à 22 atomes de carbone,
x vaut 0 ou un nombre allant de 1 à 10 et
y représente un nombre allant de 1 à 30,
et
b. des tensioactifs peu moussants non ionogènes du groupe formé par
b1) des polyéthylèneglycol/polypropylèneglycoléthers d'alcools gras à groupes d'extrémité éventuellement bloqués et répondant à la formule (II)
R⁴O(CH₂CH₂O)ₙ[CH₂(CH₃)CHO]ₘR⁵ (II)
dans laquelle R⁴ représente un radical alkyle et/ou alcényle comportant de 8 à 22 atomes de carbone,
R⁵ représente H ou un radical alkyle comportant de 1 à 8 atomes de carbone,
n représente un nombre allant de 1 à 15 et
m vaut 0 ou un nombre allant de 1 à 10, et
b2) des polypropylèneglycol/polyéthylèneglycoléthers d'alcools gras à groupes d'extrémités éventuellement bloqués et répondant à la formule (III)
R₆O[CH₂(CH₃)CHO]ₚ(CH₂CH₂O)_{q}R⁷ (III)
dans laquelle R⁶ représente un radical alkyle et/ou alcényle comportant de 8 à 22 atomes de carbone,
R⁷ représente H ou un radical alkyle comportant de 1 à 8 atomes de carbone,
p représente un nombre allant de 1 à 5 et
q représente un nombre allant de 0 à 15.

2. Mélanges tensioactifs peu moussants selon la revendications 1,
**caractérisés en ce qu'**
ils contiennent des hydroxyéthers mixtes de formule (I), dans laquelle R¹ représente un radical alkyle comportant de 8 à 14 atomes de carbone, R² représente H, R³ représente un radical alkyle comportant de 8 à 12 atomes de carbone, x vaut 0 ou les nombres allant de 1 à 3, y représente les nombres allant de 10 à 25 et z représente le nombre 1.

3. Mélanges tensioactifs peu moussants selon l'une des revendications 1 ou 2,
**caractérisés en ce qu'**
ils contiennent des polyéthylèneglycol/polypropylèneglycoléthers d'alcools gras de formule (II), dans laquelle R⁴ représente un radical alkyle comportant de 8 à 16 atomes de carbone, R⁵ représente H, n représente un nombre allant de 1 à 5 et m vaut 0.

4. Mélanges tensioactifs peu moussant selon l'une des revendications 1 à 3,
**caractérisés en ce qu'**
ils contiennent des polyéthylèneglycol/polypropylèneglycoléthers d'alcools gras de formule (II), dans laquelle R⁴ représente un radical alkyle comportant de 8 à 16 atomes de carbone, R⁵ représente H, n représente un nombre allant de 2 à 7 et m représente un nombre allant de 3 à 7.

5. Mélanges tensioactifs peu moussants selon l'une des revendications 1 à 4,
**caractérisés en ce qu'**
ils contiennent des polyéthylèneglycol/polypropylèneglycoléthers d'alcools gras de formule (II), dans laquelle R⁴ représente un radical alkyle comportant de 8 à 16 atomes de carbone, R⁵ représente le radical méthyle, n représente un nombre allant de 2 à 7 et m représente un nombre allant de 3 à 7.

6. Mélanges tensioactifs peu moussants selon l'une des revendications 1 à 5,
**caractérisés en ce qu'**
ils contiennent des polyéthylèneglycol/polypropylèneglycoléthers d'alcools gras de formule (II), dans laquelle R⁴ représente un radical alkyle comportant de 8 à 16 atomes de carbone, R⁵ représente un radical alkyle comportant de 4 à 8 atomes de carbone, n représente un nombre allant de 5 à 15 et m vaut 0.

7. Mélanges tensioactifs peu moussants selon l'une des revendications 1 à 6,
**caractérisés en ce qu'**
ils contiennent des polypropylèneglycol/polyéthylèneglycoléthers d'alcools gras de formule (III), dans laquelle R⁶ représente un radical alkyle comportant de 8 à 16 atomes de carbone, R⁷ représente H, p représente un nombre allant de 1 à 5 et q représente un nombre allant de 1 à 6.

8. Mélanges tensioactifs peu moussants selon la revendication 1,
**caractérisés en ce que**
les composants a) et b) sont contenus dans un rapport pondéral de 10 : 90 à 80 : 20.

9. Utilisation des mélanges tensioactifs peu moussants selon la revendication 1 dans des produits de nettoyage à usage industriel et domestique.

10. Utilisation de mélange tensioactifs peu moussants selon la revendication 1, dans des produits de rinçage.

11. Produits de rinçage contenant :
0,5 à 20 % en poids d'hydroxyéthers mixtes de formule (I),
0,5 à 20 % en poids, d'agents tensioactifs peu moussants de formule (II) et/ou (III),
0 à 40 % en poids de tiers solvants,
0,1 à 50 % en poids d'acides carboxyliques
1 à 20 % en poids de sels alcalins d'acides alkylbenzènesulfoniques de faible poids moléculaire,
et le complément à 100 % en poids d'eau.
